Europäisches Patentamt

**European Patent Office**

Office européen des brevets

(19)

(11) Numéro de publication: **0 027 392**
**B1**

(12) # FASCICULE DE BREVET EUROPEEN

(45) Date de publication du fascicule du brevet: **29.06.83**

(21) Numéro de dépôt: **80401288.8**

(22) Date de dépôt: **10.09.80**

(51) Int. Cl.³: **G 01 P 5/00, F 02 D 5/00, G 01 F 1/64**

(54) **Capteur pour mesurer la vitesse d'un gaz.**

(30) Priorité: **10.10.79 FR 7925174**

(43) Date de publication de la demande: **22.04.81 Bulletin 81/16**

(45) Mention de la délivrance du brevet: **29.06.83 Bulletin 83/26**

(84) Etats contractants désignés: **DE GB IT SE**

(56) Documents cités:
**DE - A - 2 039 488**

**IBM TECHNICAL DISCLOSURE BULLETIN, vol. 18, no. 10, mars 1976, NEW YORK (US) J.A. CALISE et al.: "Velocity Measurement Using Thermal Pulses", pages 3469 et 3470**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Lombard, Claude**
**60, rue Corneille**
**F-78150 Le Chesnay (FR)**

(74) Mandataire: **Jacques, Max et al,**
**RNUR - S. 0804 BP 103**
**F-92109 Boulogne Billancourt (FR)**

Courier Press, Leamington Spa, England.

## Capteur pour mesurer la vitesse d'un gaz.

La présente invention est relative à un capteur de mesure de la vitesse d'un gaz basé sur un prénomène d'ionisation et plus particulièrement à un capteur de mesure, par temps de vol d'ions, de la vitesse d'alimentation en air à l'entrée des cylindres d'un moteur à combustion interne.

On connait déjà par la demande de brevet allemande DE—A—2 039 488 un capteur pour mesurer la vitesse d'un gaz circulant dans un conduit pourvu d'un organe de vannage, du type comportant au moins une électrode d'ionisation des gaz, une électrode de mesure à une certaine distance de celle-ci, une source de haute tension pulsée reliée à l'électrode d'ionisation et des moyens de mesure du temps de vol des ions d'une électrode à l'autre.

Dans ce type de capteur de mesure de la vitesse d'un gaz, notamment d'air, une première électrode ionise le gaz et une autre électrode, réceptrice, collecte une partie des ions avec un retard proportionnel à la distance et à la vitesse.

Lorsque l'on applique ce type de capteur à l'air admis à l'entrée d'un moteur à combustion interne avec papillon d'admission, il apparait certaines difficultés lorsque l'on cherche à obtenir un dispositif très précis car le compromis longueur de la base de mesure et vitesse de réponse n'est par toujours facile à optimaliser, notamment lorsqu'il y a des mouvements rapides du papillon d'admission. Lorsque le moteur tourne très rapidement et qu'on ferme l'admission jusqu'à une position correspondant au règlage du ralenti, très peu d'air continue à entrer dans le moteur, ce qui signifie une vitesse faible dans l'organe de mesure avant le papillon.

Le même problème peut se poser pour des mesures autres que sur moteur à combustion interne lorsqu'il y a une grande dynamique de vitesse et qu'elle est commandée par une vanne.

La présente invention a pour but d'apporter un remède à cette difficulté de fonctionnement. A cet effet, elle a pour objet un capteur du type selon le préambule de la revendication 1, caractérisé en ce qu'il est prévu, en relation avec les changements de position de l'organe de vannage, des moyens de couplage de position entre l'organe de vannage et l'une au moins des électrodes d'ionisation ou l'électrode de mesure des ions de telle manière que la distance entre les électrodes varie en fonction de la position de l'organe de vannage.

Le quotient temps de vol/longueur variable de la base peut donc être calculé et connu grâce à un microcalculateur relié au dispositif.

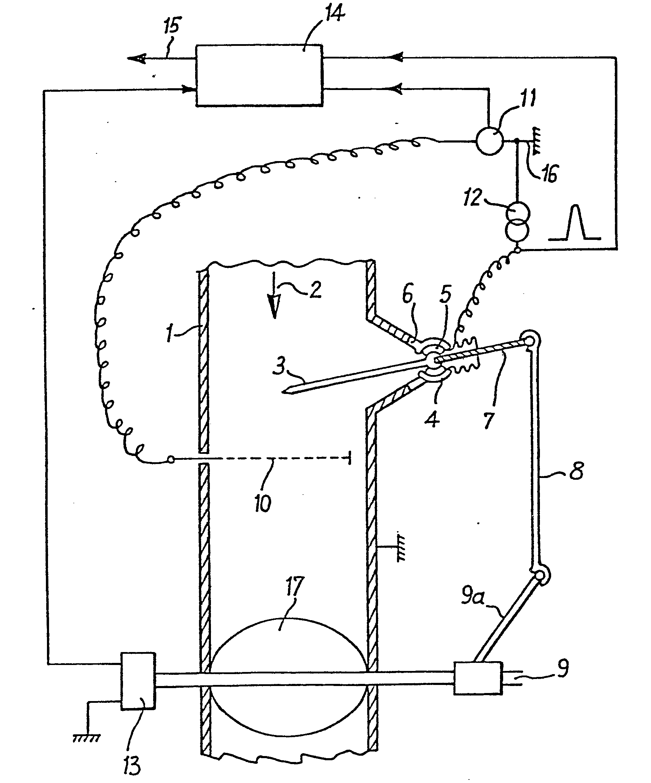

L'invention sera décrite grâce à la figure unique annexée donnée à titre d'exemple non limitatif du dispositif selon l'invention.

Dans le conduit d'admission d'air 1 on rencontre à partir de l'arrivée d'air 2 une électrode mobile émissive d'ions 3 pivotant dans une articulation 4 assurant à la fois l'étanchéité, le mouvement et la conduction électrique. Ceci peut notamment être obtenu par un joint 5 en caoutchouc conducteur, enfermé dans une pièce 6 isolant l'électrode 3 du conduit 1. Une tige isolante 7 prolongeant l'électrode 3 est couplée par une biellette 8 à une saillie 9a du papillon des gaz 17 ce qui rend solidaires les mouvements du pipillon 17 et de l'électrode 3 dont la distance par rapport à l'électrode de mesure 10 collectrice des ions est ainsi rendue variable.

L'électrode 10 est reliée par un moyen 11 de mesure de courant ou de tension à la masse 16 et à une générateur 12 de haute tension pulsée dont l'autre extrèmité est reliée à l'électrode mobile 3.

Un organe 13 de mesure de la position angulaire du papillon 17 est calé sur l'arbre 9. A titre d'exemple non limitatif ce peut être un potentiomètre à piste résistive ou un codeur optique du commerce.

L'information angulaire recueillie sur 13 est une mesure de la distance entre les électrodes 3 et 10 à travers la géométrie des bras de levier 3, 7, 8, 9a. Elle est envoyée dans un calculateur 14 où elle est traitée en corrélation avec les informations venant de l'émission des ions sous l'effet de la haute tension pulsée 12 ainsi qu'avec la détection de passage des ions en 10 transformée en signal électrique utilisable en 11. Le calculateur peut être de tout type connu de l'homme de l'art et notamment de type numérique à microprocesseur. Il effectue le quotient T/d, T étant le temps de vol et $d$ la distance interélectrodes. Le résultat donné sur la ligne 15 est directement la vitesse de l'air à l'intérieur de la conduite 1.

Bien entendu, l'organe détecteur 13 peut être placé directement au niveau de la tige de commande 7 ou encore détecter optiquement la position de l'électrode 3 sans changer les caractéristiques de l'invention. De même le couplage entre l'électrode 3 et le papillon 17 peut n'être que partiel et n'agir par exemple que pour des positions du papillon proches de la fermeture.

On notera que les caractéristiques du papillon 17 n'interviennent pas dans la précision de mesure pour laquelle intervient seulement la distance entre les électrodes 3 et 10.

Le fonctionnement dans les conditions les plus critiques est le suivant: lorsque le papillon 17 est ouvert et la vitesse du moteur élevée, le débit en 2 est important et la vitesse d'air rapide c'est-à-dire que le temps de transit des ions entre les électrodes 3 et 10 est court. Si l'on ferme brutalement le papillon 17 l'électrode 3 se rapproche de l'électrode 10 malgré une vitesse d'air fortement réduite le temps de vol des ions reste dans des limites acceptables comparativement à la durée d'un demicycle de rotation du moteur.

D'autres formes de réalisation sont possibles comme à titre d'exemple la mobilité de l'électrode collectrice 10 au lieu de l'électrode émettrice 3 ou encore la fixation directe de l'électrode 3 sur le papillon 17.

## Revendications

1. Capteur pour mesurer la vitesse d'un gaz circulant dans un conduit (1) qui comporte un organe de vannage (17) et au moins une électrode d'ionisation des gaz (3), une électrode de mesure (10) à une certaine distance de celle-ci, une source de haute tension pulsée (12) reliée à l'électrode d'ionisation, des moyens de mesure du temps de vol des ions d'une électrode à l'autre, caractérisé en ce qu'il est prévu, en relation avec les changements de position de l'organe de vannage, des moyens de couplage de position (7, 8, 9a) entre l'organe de vannage (17) et l'une au moins des électrodes d'ionisation (3) ou l'électrode de mesure des ions (10) de telle manière que la distance entre les électrodes varie en fonction de la position de l'organe de vannage.

2. Capteur de mesure selon la revendication 1, caractérisé en ce que l'organe de vannage est un papillon, et en ce que l'une des électrodes (3, 10) peut pivoter autour de son point de fixation.

3. Capteur de mesure selon les revendications 1 et 2, caractérisé en ce que l'électrode mobile est l'électrode d'ionisation.

4. Capteur de mesure suivant l'une des revendications 1 à 3, caractérisé en ce que l'électrode de mesure (3, 10) est disposée à l'intérieur de la conduite (1), avant l'organe de vannage (17) en se déplaçant dans la conduite dans le sens d'écoulement des gaz.

5. Capteur de mesure suivant l'une quelconque des revendications 1 à 4, caractérisé en ce que l'électrode mobile se rapproche de l'électrode fixe lorsque se ferme l'organe de vannage (17).

## Patentansprüche

1. Fühler zur Messung der Geschwindigkeit eines eine Leitung (1) durchströmenden Gases, das aus einem Drosselorgan (17) und aus mindestens einer Ionisationselektrode (3), einer in einer bestimmten Entfernung derselben liegenden Messelektrode (10), einer mit der Ionisationselektrode verbundenen pulsierenden Hochspannungsquelle (12) und Mitteln zur Messung des Laufzeit der Ionen von einer Elektrode zur anderen besteht, dadurch gekennzeichnet, dass in Verbindung mit den Stellungsveränderungen des Drosselorgans Kopplungsmittel (7, 8, 9a) zwischen dem Drosselorgan (17) und mindestens einer der Ionisationselektroden (3) oder der Ionen-Messelektrode (10) vorgesehen sind, derart, dass der Abstand zwischen den Elektroden sich in Abhängigkeit von der Stellung des Drosselorgans ändert.

2. Messfühler nach Anspruch 1, dadurch gekennzeichnet, dass das Drosselorgan eine Drosselklappe ist, und dass eine der Elektroden (3, 10) um ihren Befestigungspunkt schwenkbar ist.

3. Messfühler nach den Ansprüchen 1 und 2, dadurch gekennzeichnet, dass die bewegliche Elektrode die Ionisationselektrode ist.

4. Messfühler nach den Ansprüchen 1 bis 3, dadurch gekennzeichnet, dass die Messelektrode (3, 10) im Innern der Leitung (1) vor dem Drosselorgan (17) angeordnet ist und sich in der Gasströmungsrichtung bewegt.

5. Messfühler nach den Ansprüchen 1 bis 4, dadurch gekennzeichnet, dass die bewegliche Elektrode sich der ortsfesten Elektrode nähert, wenn das Drosselorgan (17) sich schliesst.

## Claims

1. Speed sensor for a gas flowing in a pipe (1) which comprises a valve element (17) and at least one gas ionizing electrode (3), a measuring electrode (10) spaced at determined distance from the latter, a pulsed high voltage supply (12) connected to the ionizing electrode, means for measuring the flight period of time of the ions from one electrode to the other, characterized in that there is provided, in relationship with the position variations of the valve element, position coupling means (7, 8, 9a) between the valve element (17) and at least one of the ionization electrodes (3) or the ion measuring electrode (10) so that the distance between the electrodes is varied in function of the valve element position.

2. Measuring sensor according to claim 1, characterized in that the valve element is a rotating butterfly valve, and in that one of the electrodes (3, 10) is pivotably mounted about its fixing point.

3. Measuring sensor according to claims 1 and 2, characterized in that the movable electrode is the ionizing electrode.

4. Measuring sensor according to any one of claims 1 to 3, characterized in that the measuring electrode (3, 10) is arranged within the pipe (1), upstream of the valve element (17) with respect to the direction of the gas flow.

5. Measuring sensor according to any one of claims 1 to 4, characterized in that the movable electrode comes near the fixed electrode when the valve element (17) comes to a close position.